# EUROPÄISCHE PATENTANMELDUNG

(11) **EP 3 871 931 A1**
(43) Veröffentlichungstag der Anmeldung: **01.09.2021**
(21) Anmeldenummer: 20465511.2
(22) Anmeldetag: 28.02.2020
(51) Int. Cl.: B60T 11/16

(54) **BREMSGERÄT FÜR EINE HYDRAULISCHE KRAFTFAHRZEUGBREMSANLAGE**

(71) Anmelder: Continental Teves AG & Co. OHG, 60488 Frankfurt am Main (DE)
(72) Erfinder: Padurariu, Mihai, 60488 Frankfurt am Main (DE); Avacaritei, Constantin, 60488 Frankfurt am Main (DE); Dumitrache, Bogdan-Eugen, 60488 Frankfurt am Main (DE)

(57) **Zusammenfassung**

Bremsgerät für eine hydraulische Kraftfahrzeugbremsanlage.

Die Erfindung betrifft ein Bremsgerät (1) für eine Fahrzeugbremsanlage, mit einem Gehäuse (2), welches wenigstens eine Zylinderbohrung (3) mit einer Zylinderbohrungsachse (Z) aufweist, mit einem Kolben (4), welcher in der Zylinderbohrung (3) verschiebbar gelagert ist und darin eine Druckkammer (5) begrenzt, wobei der Kolben (4) durch ein Betätigungsglied (6) betätigbar ist und druckkammerseitig einen Druckabschnitt (8) mit einer kreisrunden Außenkontur aufweist, welcher zur Erzeugung eines hydraulischen Drucks in der Druckkammer (5) vorgesehen ist und hierfür mit seiner Mantelfläche (12) an wenigstens einem Dichtelement (18, 18') abgleitet, welches die Druckkammer (5) gegenüber der Umgebung abgedichtet. Um die Herstellung von Bremsgerätvarianten mit mehreren unterschiedlichen Kolbendurchmessern kostengünstiger und effizienter zu gestalten wird erfindungsgemäß vorgeschlagen, dass das der Kolben (4) betätigungsseitig einen Führungsabschnitt (7) aufweist, welcher derart ausgelegt ist, dass seine radiale Außenkontur eine Verdrehung des Druckabschnitts (8) um die Zylinderbohrungsachse (Z) verhindert.

## Beschreibung

Die Erfindung betrifft ein Bremsgerät für eine hydraulische Fahrzeugbremsanlage, insbesondere eine Kraftfahrzeugbremsanlage, nach dem Oberbegriff des Anspruchs 1.

Es sind vielfach Bremsgeräte mit einem Hauptzylinder bekannt, bei denen ein Kolben in einer Zylinderbohrung verschoben wird, um in einem Betriebszustand auf eine Druckkammer einzuwirken, weiche mit einem hydraulischen Druckmittel befüllt ist. Dabei ist es bekannt und erforderlich, je nach Bremsgerättyp zumindest bestimmte diskrete Positionen des Kolbens oder seine Bewegung kontinuierlich zu erfassen um diese Information für vielfältige andere Prozesse zu verwenden - beispielsweise Aktivierung eines Bremslichtschalters Ansteuerung eines Bremsgerätantriebs, Modulation von Bremsdruck in einzelnen hydraulischen Kreisen, Funktionskontrolle und vieles mehr.

Zu Erfassung der Lage und/oder Bewegung des Kolbens ist es bekannt, in dem Kolben ein meist magnetisches Geberelement aufzunehmen, welcher die Lage des Kolbens repräsentiert. Eine sehr verbreitete, herstelltechnisch besonders einfache und kostengünstige Lösung stellt dabei ein ring- oder scheibenförmiger Magnet dar, welcher in eine Innenbohrung des Kolbens koaxial zur Kolbenachse eingesetzt wird. Die Position des Geberelements wird von einem Sensorelement erfasst, welches in einem definierten Abstand vom Geberelement in oder an dem Gehäuse des Bremsgeräts außerhalb der Zylinderbohrung angeordnetes angeordnet ist.

Man bemüht sich, Dimensionen und Eigenschaften des Bremsgeräts optimal an die spezifischen Anforderungen des jeweiligen Fahrzeugs und der verwendeten Bremsanlage anzupassen. Bei unterschiedlichen Bremsanlagen benötigen im Bremsbetrieb unterschiedliche Arbeitsvolumina des hydraulischen Druckmittels um beispielsweise unterschiedlich groß dimensionierten Bremssättel zu betätigen. Daher ist es bekannt, Varianten von Bremsgeräten mit unterschiedlichen Durchmessern von Zylinderbohrungen respektive Kolben auszuführen, um beim gleichen Kolbenhub unterschiedlichen Arbeitsvolumina verdrängen zu können. So ist es beispielsweise bekannt, mehrere Varianten von einem Bremsgerät mit Kolbendurchmessern zwischen Ø19mm bis zu Ø28mm oder sogar mehr herzustellen. Bei Verwendung eines größeren Kolbens würde sich jedoch der Abstand zwischen der Achse des Magneten und dem Sensorelement ebenfalls vergrößern und die korrekte Erfassung beeinträchtigen. Um dieses Problem zu lösen ist es bekannt, für Kolbenvarianten mit verschiedenen Durchmessern jeweils gesondert angepasste Geberelemente benötigt werden. Diese führt zu einem erhöhten Herstellaufwand, Werkzeug- und Logistikkosten.

Um solche Kosten zu reduzieren ist es bekannt, das Geberelement für den größten Kolbendurchmesser auszulegen und auch bei den kleineren Kolben einzusetzen. Ein derartiges Geberelement wird zwar auf jeden Fall von dem Sensorelement erfasst, bleibt jedoch überdimensionier. Dies führt jedoch zu einem unnötig erhöhten Materialverbrauch und einem zusätzlichen Kalibrierungsaufwand, wodurch ebenfalls Kosten erhöht werden.

Es stellt sich somit eine Aufgabe, eine verbesserte Lösung für Bremsgeräte mit mehreren unterschiedlichen Kolbendurchmessern vorzuschlagen, welche die vorgenannten Nachteile vermeidet und bei einem reduzierten Materialverbrauch eine zuverlässige Erfassung des Geberelements ermöglicht.

Die Aufgabe wird erfindungsgemäß durch ein Bremsgerät mit der Merkmalskombination nach Anspruch 1 gelöst. Unteransprüche geben weitere vorteilhafte Ausführungen und Weiterbildungen der Erfindung an.

Die Erfindung sieht im Wesentlichen vor, dass der Kolben betätigungsseitig einen Abschnitt mit einem reduzierten Durchmesser umfasst, welche eine insgesamt nicht runde Außenkontur mit wenigstens einem abgeflachten Querschnittsabschnitt aufweist. Der abgeflachte Querschnittsabschnitt stützt sich in Umfangsrichtung an einer korrespondierenden Fläche in einem betätigungsseitig an dem Gehäuse angeordneten Führungsflansch und verhindert dadurch die Drehung des Kolbens um die Zylinderbohrungsachse.

Dadurch kann das Geberelement radial in Richtung Sensorelement versetzt angeordnet werden kann. Die Größe des Geberelements kann reduziert werden, ein standardisiertes Element kann zudem für mehrere Kolbengrößen eingesetzt werden. Kosten für Werkstoff, Erstellung Montage und Logistik werden reduziert

Weitere Merkmale und Vorteile der Erfindung ergeben sich aus der nachfolgenden Beschreibung von mehreren Ausführungsbeispielen. Nachstehend zeigten:
Fig.1 ein gattungsgemäßes Bremsgerät nach dem Stand der Technik.
Fig.2 vereinfachte vergrößerte Darstellung des Hauptzylinders gemäß Fig.1 in Längs- und Querschnitt.
Fig.3 vereinfachte Darstellung einer ersten verbesserten Ausführung des Hauptzylinders in Längs- und Querschnitt.
Fig.4 vereinfachte Darstellung einer zweiten verbesserten Ausführung des Hauptzylinders in Längs- und Querschnitt.
Fig.5 ein Ausführungsbeispiel eines Bremsgeräts im Bereich des Hauptzylinders gemäß Ausführungsform nach Fig.3 in Längsschnitt.
Fig.6 einen Führungsflansch und einen Kolben gemäß Ausführung nach Fig.3 in räumlicher Ansicht.

Fig.1

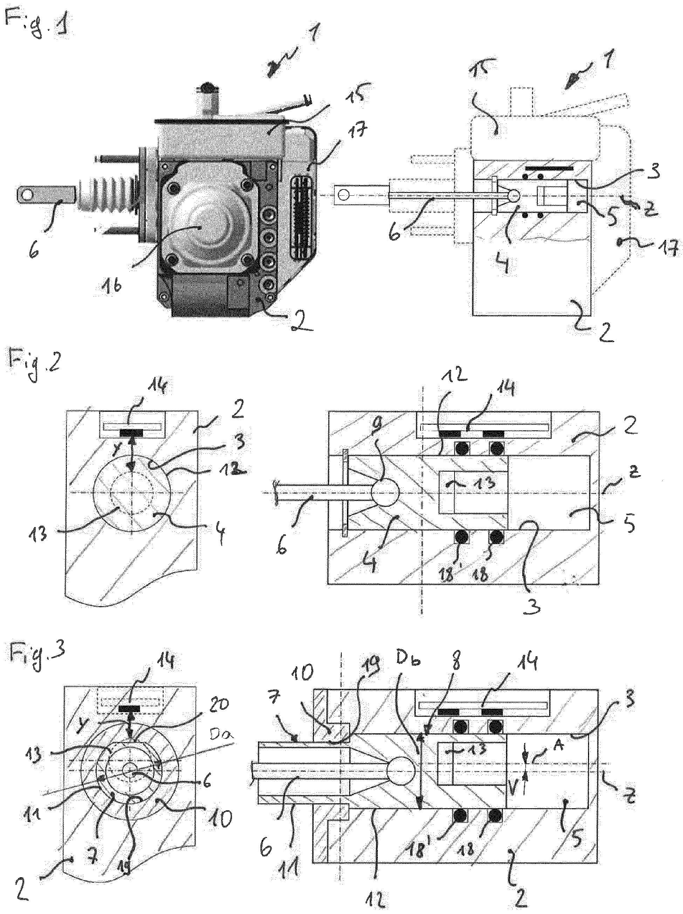

Fig.1 zeigt ein bekanntes gattungsgemäßes Bremsgerät 1 am Beispiel eines fremdangetriebenen kombinierten Aggregats zur Erzeugung und Modulation von Bremsdruck.

Das Bremsgerät 1 verfügt über ein Gehäuse 2 mit einer hier nicht explizit dargestellten Ventilanordnung und einem Hauptzylinder. Der Hauptzylinder weist eine entlang einer Zylinderbohrungsachse Z getriebene Zylinderbohrung 3, in welcher ein Kolben 4 verschiebbar gelagert und durch ein Betätigungsglied 6 betätigt wird. Das Betätigungsglied 6 ist an ein hier nicht gezeigtes Bremspedal gekoppelt, wobei innerhalb der Erfindung auch andere, beispielsweise elektromechanische Betätigungsarten ebenfalls zulässig sind.

Der Kolben 4 begrenzt in der Zylinderbohrung 3 eine mit einem hydraulischen Druckmittel gefüllte Druckkammer 5. Bei dem hier dargestellten Bremsgerät 1 ist die Druckkammer 5 in einem regulären Bremsbetrieb auf eine hier nicht explizit dargestellte Simulatoreinheit aufgeschaltet. Bei einem irregulären Bremsbetrieb, in einer sogenannten Rückfallebene, kann die Druckkammer 5 stattdessen auf die hier ebenfalls nicht dargestellten Radbremsen aufgeschaltet werden und dient so unmittelbar zum Erzeugen von Bremsdruck.

Das dargestellte Bremsgerät 1 verfügt über eine Hauptzylindereinheit mit einem einzelnen Kolben 4. Die Erfindung erstreckt sich jedoch ebenso auf weitere Ausführungen mit mehreren Kolben, beispielsweise mit Tandem-Hauptzylindern.

Auf den jeweils gegenüberliegenden Seiten vom Gehäuse 2 befinden sich eine elektromotorische Antriebseinheit 16, welche zum Aufbau des erforderlichen Bremsdrucks in einem regulären Bremsbetrieb verwendet wird und eine elektronische Steuereinheit 17 zum Ansteuern von Komponenten des Bremsgeräts 1.

Ein Druckmittelbehälter 17 dient zur Versorgung des Bremsgeräts 1 mit einem hydraulischen Druckmittel.

Fig.2
Zur Erläuterung spezifischer mit dem bekannten Stand der Technik eihergehenden Nachteile zeigt die Fig.2 vereinfacht die bekannte Ausführungsform des Hauptzylinders gemäß Fig.1.

Aus einem hier nicht gezeigten Bremspedal wird die Betätigungskraft über ein Betätigungsglied 6 in den Kolben 4 eingeleitet. Hierfür verfügt der Kolben 4 über eine Schnittstelle 9, in welcher das kolbenseitige Ende des Betätigungsglieds 6 befestigt oder zumindest abgestützt ist.

Über einen druckkammerseitigen Druckabschnitt 8 wird die Betätigungskraft an das Druckmittel in der Druckkammer 5 weitergeleitet. Zwei Dichtelemente 18, 18' gleiten bei Betätigung des Kolbens 4 hydraulisch abdichtend an der zylindrischen Mantelfläche 12 des Druckabschnitts 8 ab und ermöglichen dadurch einen Druckaufbau in der Druckkammer 5.

Ein aus einem Magnetwerkstoff hergestelltes Geberelement 13 ist ebenfalls innerhalb des Druckabschnitts 8 in dem Kolben 4 angeordnet. Bei einer Bewegung des Kolbens 4 erregt ein durch das Geberelement 13 erzeugtes Magnetfeld ein Sensorelement 14, welches in einem definierten Radialabstand zur Zylinderbohrung 3 in dem Gehäuse 2 angeordnet ist. Damit das System dauerhaft korrekten funktioniert, muss der resultierende Abstand y zwischen dem Geberelement 13 und dem Sensorelement 14 stets innerhalb enger Toleranzen gehalten werden.

Der Kolben 4 ist einteilig und rotationssymmetrisch gestaltet, die Mittelachs A des Geberelements 13 ist identisch mit der Mittelachse des Druckabschnitts 8, welche im Wesentlichen der Zylinderbohrungsachse Z entspricht, wenn man die geringen Lagetoleranzen aufgrund der Elastizität von Dichtelementen 18, 18' außer Acht lässt. Aufgrund seiner rotationssymmetrischen Gestalt kann sich der Kolben 4 im Betrieb willkürlich um die Zylinderbohrungsachse Z drehen. Um stets ein korrektes Magnetfeld für jeden Drehwinkel des Kolbens 4 innerhalb der Zylinderbohrung 3 zu gewährleisten, muss das Geberelement 13 daher nicht nur eine bestimmte Mindestgröße haben, sondern konzentrisch zur Zylinderbohrungsachse Z aufgebaut und angeordnet sein - beispielsweise scheibenförmig oder ringförmig.

Fig.3
Fig.3 seigt eine erste erfindungsgemäße Ausführungsform des Hauptzylinders des Bremsgeräts 1.

Im Unterschied zu der bekannten, vorstehend beschriebenen Ausführung ist der Kolben 4 nicht mehr vollständig rotationssymmetrisch gestaltet. Betätigungsseitig verfügt der verbesserte Kolben 4 über einen einteilig mit diesem ausgebildeten Führungsabschnitt 7. Die Außenkontur des Führungsabschnitts 7 ist nichtrund ausgebildet und somit nicht identisch mit der der Außenkontur des Druckabschnitts 8. Im gezeigten Ausführungsbeispiel ist die Abweichung von einer Kreisform durch einen kreissektorförmigen Ausschnitt erzeugt, wodurch an dem Führungsabschnitt 7 ein abgeflacht ausgebildeter Querschnittsabschnitt 20 realisiert ist.

Die übrige Mantelfläche 11 des Führungsabschnitts 7 ist zylindrisch und koaxial zur Mantelfläche 12 des Druckabschnitts 8 ausgebildet, verfügt jedoch über einen gegenüber dem Durchmesser Db der Mantelfläche 12 des Druckabschnitts 8 verringerten Durchmesser Da.

Des Weiteren ist an dem Gehäuse 2 betätigungsseitig ein gesonderter Führungsflansch 10 verdrehfest angeordnet. Der Führungsabschnitt 7 durchgreift einen Durchbruch 19 in dem Führungsflansch 10 und stützt sich darin in Umfangsrichtung ab, so dass eine Verdrehung des Führungsabschnitt 7 in Umfangsrichtung verhindert ist. Die Innenkontur des Durchbruchs 19 ist zu diesem Zweck nichtrund komplementär zu der Außenkontur des Führungsabschnitts 7 gestaltet.

Weil der Kolben 4 nun gegenüber dem Sensorelement 14 stets in einer eindeutigen diskreten Umfangsposition beziehungsweise Drehwinkel bezüglich der Zylinderbohrungsachse Z betätigt wird, kann das Geberelement 13 innerhalb des Kolbens 4 radial in Richtung Sensorelement 14 um einen Versatz V versetzt und somit möglichst nahe des Sensorelements 14 angeordnet werden. Dadurch kann das Geberelement 13 ohne Funktionsverlust insgesamt kleiner dimensioniert werden. Für verschiedene Durchmesser des Kolbens 4 kann derselbe Geberelement 13 verwendet werden, indem der Versatz V jeweils so gewählt wird, dass der Abstand y zum Sensorelement 14 unabhängig vom Kolbendurchmesser konstant bleibt.

Fig.4

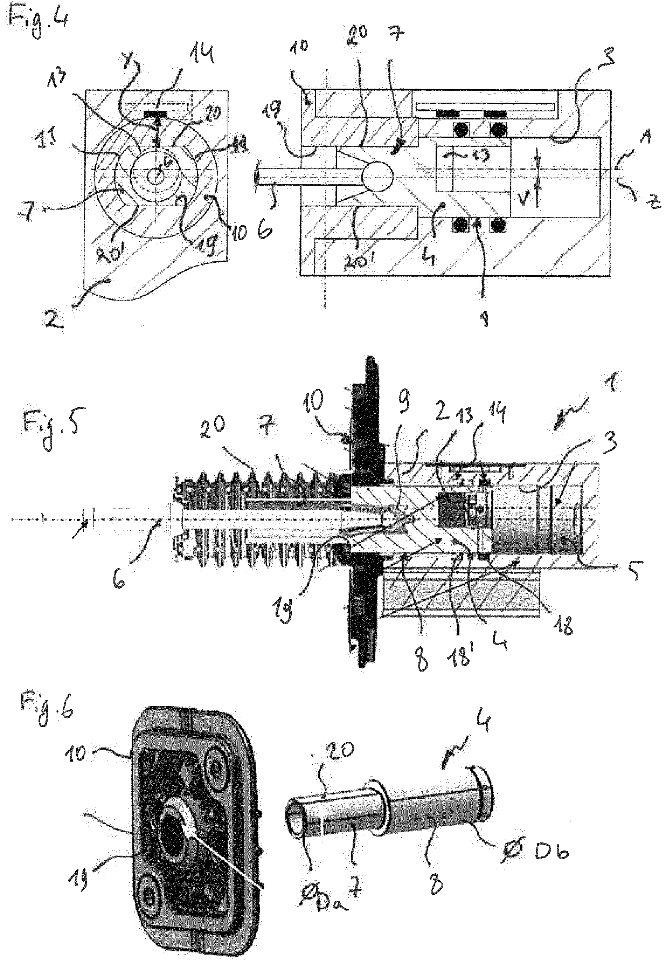

In der Fig.4 ist eine weitere Ausführungsform des Hauptzylinders eines Bremsgeräts 1 dargestellt.

Im gezeigten Ausführungsbeispiel ist verfügt der Flussabschnitt 7 über zwei radial gegenüberliegende abgeflachten Querschnittsabschnitte 20, 20'. Für einen gegenüber der Ausführungsform nach Fig.3 reduzierten Herstellaufwand ist der Durchmesser Da von zylindrischen Bereichen der Mantelfläche 11 des Führungsabschnitts 7 identisch mit dem Außendurchmesser Db des Druckabschnitts 8. Die abgeflachten Querschnittsabschnitte 20, 20' können so besonders einfach durch ablesen entsprechender Kreissegmente an einem gedrehten, tiefgezogenen oder stranggepressten Kolbenrohling erzeugt werden. Grundsätzlich können Anzahl, Gestalt und Lage der nichtrunden Außenkonturbereiche an dem Führungsabschnitt 7 innerhalb der Erfindung unter Beibehaltung der Grundfunktion variieren und bleiben nicht auf die vorstehend dargestellten Ausführungsbeispiele beschränkt.

Fig.5
Fig.5 dient zur Verdeutlichung einer möglichen Umsetzung der Ausführungsform nach Fig.3.

Fig.6
Fig. 6 zeigt in räumlicher Ansicht einen Kolben 4 und einen Führungsflansch 10 gemäß Fig. 5, welche anhand dem durch die Fig.3 beschriebenen Grundprinzip gestaltet sind.

### Bezugszeichen

- 1: Bremsgerät
- 2: Gehäuse
- 3: Zylinderbohrung
- 4: Kolben
- 5: Druckkammer
- 6: Betätigungsglied
- 7: Führungsabschnitt
- 8: Druckabschnitt
- 9: Schnittstelle
- 10: Führungsflansch
- 11: Mantelfläche
- 12: Mantelfläche
- 13: Geberelement
- 14: Sensorelement
- 15: Druckmittelbehälter
- 16: Antriebseinheit
- 17: Elektronische Steuereinheit
- 18: Dichtelement
- 19: Durchbruch
- 20: Querschnittsabschnitt
- A: Mittelachse des Geberelements
- Da: Durchmesser des Führungsabschnitts
- Db: Durchmesser des Druckabschnitts
- V: Versatz
- Z: Zylinderbohrungsachse
- y: Abstand zwischen Geberelement und Sensorelement.

## Patentansprüche

1. Bremsgerät (1) für eine Fahrzeugbremsanlage, mit einem Gehäuse (2), welches wenigstens eine Zylinderbohrung (3) mit einer Zylinderbohrungsachse (Z) aufweist, mit einem Kolben (4), welcher in der Zylinderbohrung (3) verschiebbar gelagert ist und darin eine Druckkammer (5) begrenzt, wobei der Kolben (4) durch ein Betätigungsglied (6) betätigbar ist und druckkammerseitig einen Druckabschnitt (8) mit einer kreisrunden Außenkontur aufweist, welcher zur Erzeugung eines hydraulischen Drucks in der Druckkammer (5) vorgesehen ist und hierfür mit seiner Mantelfläche (12) an wenigstens einem Dichtelement (18, 18') abgleitet, welches die Druckkammer (5) gegenüber der Umgebung abgedichtet, **dadurch gekennzeichnet, dass** der Kolben (4) betätigungsseitig einen Führungsabschnitt (7) aufweist, welcher derart ausgelegt ist, dass seine radiale Außenkontur eine Verdrehung des Druckabschnitts (8) um die Zylinderbohrungsachse (Z) verhindert.

2. Bremsgerät (1) nach Anspruch 1 **dadurch gekennzeichnet, dass** der Führungsabschnitt (7) im Querschnitt eine von einer Außenkontur des Druckabschnitts (8) abweichende Außenkontur aufweist.

3. Bremsgerät (1) nach Anspruch 2 **dadurch gekennzeichnet, dass** der Führungsabschnitt (7) im Querschnitt eine nichtrunde Außenkontur aufweist.

4. Bremsgerät (1) nach Anspruch 3 **dadurch gekennzeichnet, dass** der Führungsabschnitt (7) im Querschnitt wenigstens einen abgeflacht ausgebildeten Querschnittsabschnitt (20) aufweist.

5. Bremsgerät (1) nach wenigstens einem der vorstehenden Ansprüche **dadurch gekennzeichnet, dass** der Führungsabschnitt (7) in Umfangsrichtung bereichsweise eine zylindrische Mantelfläche (11) umfasst, welche koaxial zur Mantelfläche (12) des Druckabschnitts (8) ausgebildet ist.

6. Bremsgerät (1) nach Anspruch 5 **dadurch gekennzeichnet, dass** die Mantelfläche (11) des Führungsabschnitt (7) einen gegenüber dem Durchmesser (Db) der Mantelfläche (12) des Druckabschnitts (8) reduzierten Durchmesser (Da) aufweist, sodass gilt Da<Db.

7. Bremsgerät (1) nach Anspruch 1 **dadurch gekennzeichnet, dass** an dem Gehäuse (2) betätigungsseitig ein gesonderter Führungsflansch (10) zur Führung des Führungsabschnitt (7) verdrehfest angeordnet ist, wobei der Führungsflansch (10) einen Durchbruch (19) aufweist, welcher mit der Außenkontur des Führungsabschnitts (7) korrespondiert und eine Verdrehung des Führungsabschnitt (7) in Umfangsrichtung verhindert.

8. Bremsgerät (1) nach wenigstens einem der vorstehenden Ansprüche **dadurch gekennzeichnet, dass** im Druckabschnitt (8) ein Geberelement (13) zur Erfassung von wenigstens einer Position des Kolbens (4) durch ein außerhalb der Zylinderbohrung (3) angeordnetes Sensorelement (14) positioniert ist.

9. Bremsgerät (1) nach Anspruch 8 **dadurch gekennzeichnet, dass** das Geberelement (13) in Bezug zur Zylinderbohrungsachse (Z) radial derart in Richtung Sensorelement (14) versetzt angeordnet ist, dass ein Radialabstand zwischen dem Geberelement (13) und der Mantelfläche (12) des Druckabschnitts (8) in einem dem Sensorelement (13) zugewandten Abschnitt der Mantelfläche (12) am geringsten ist.
